(19) Europäisches Patentamt
European Patent Office
Office européen des brevets

(11) **EP 2 691 691 B1**

(12) **EUROPÄISCHE PATENTSCHRIFT**

(45) Veröffentlichungstag und Bekanntmachung des Hinweises auf die Patenterteilung:
**25.05.2016 Patentblatt 2016/21**

(21) Anmeldenummer: **12703994.9**

(22) Anmeldetag: **27.01.2012**

(51) Int Cl.:
*F21V 5/00* (2015.01)        *G02B 3/00* (2006.01)
*F21Y 105/00* (2016.01)     *G02B 3/08* (2006.01)
*F21V 5/04* (2006.01)

(86) Internationale Anmeldenummer:
**PCT/EP2012/051378**

(87) Internationale Veröffentlichungsnummer:
**WO 2012/130495 (04.10.2012 Gazette 2012/40)**

(54) **OPTISCHES ELEMENT UND STRAHLUNGSEMITTIERENDE VORRICHTUNG MIT EINEM DERARTIGEN OPTISCHEN ELEMENT**

OPTICAL ELEMENT AND RADIATION-EMITTING DEVICE COMPRISING SUCH AN OPTICAL ELEMENT

ÉLÉMENT OPTIQUE ET DISPOSITIF ÉMETTEUR D'UN RAYONNEMENT DOTÉ D'UN TEL ÉLÉMENT OPTIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.03.2011 DE 102011015405**

(43) Veröffentlichungstag der Anmeldung:
**05.02.2014 Patentblatt 2014/06**

(73) Patentinhaber: **OSRAM Opto Semiconductors GmbH**
**93055 Regensburg (DE)**

(72) Erfinder:
• **STREPPEL, Ulrich**
**93059 Regensburg (DE)**
• **MARKYTAN, Ales**
**93055 Regensburg (DE)**
• **GÄRTNER, Christian**
**93055 Regensburg (DE)**

(74) Vertreter: **Epping - Hermann - Fischer Patentanwaltsgesellschaft mbH**
**Schloßschmidstraße 5**
**80639 München (DE)**

(56) Entgegenhaltungen:
EP-A1- 2 110 689     GB-A- 2 332 638
US-A- 2 246 098     US-A1- 2005 190 564
US-B1- 6 264 347     US-B1- 7 123 419

**Beschreibung**

Die Erfindung betrifft ein optisches Element umfassend einen Optikkörper und eine Mehrzahl von Mikrostrukturen sowie eine strahlungsemittierende Vorrichtung mit einem Halbleiterbauelement und einem derartigen optischen Element.

Für die Herstellung von strahlungsemittierenden Vorrichtungen großer Helligkeit ist es notwendig, mehr als ein strahlungsemittierendes Bauelement zu verwenden, um die geforderte Helligkeit zu erreichen. Es liegt daher in diesen Anwendungen beispielsweise eine Anordnung mehrerer nebeneinander angebrachter LEDs vor. Wird eine Optik zur Formung des von den LEDs abgestrahlten Lichtes verwendet, kommt es unter anderem aufgrund der mehreren räumlich voneinander getrennten LEDs zu einer Aufspaltung der von der Optik abgestrahlten Bündelstrahlen, sowie zu koronaartigen Schattenwürfen aufgrund der Apertur der Optik, die je nach der jeweiligen Position der LEDs die abgestrahlten Lichtbündel in unterschiedliche Raumbereiche begrenzt. Folge ist nachteilig eine inhomogene Ausleuchtung.

Um diesem Problem entgegenzutreten ist es bekannt, hinter den LEDs streuende Elemente anzubringen, zum Beispiel diffusorhaltige Elemente oder Elemente mit großer Oberflächenrauigkeit. Dies führt jedoch nachteilig zu großen Verlusten, da ein großer Teil des von den LED abgestrahlten Lichts wieder in Rückwärtsrichtung gestreut wird und somit größtenteils für die Anwendung verloren geht.

Weiter ist es bekannt, Elemente mit variabler Transmission hinter der Optik anzubringen. Dies ist jedoch ebenso nachteilig, da dieses Verfahren auf der Abschattung der abgestrahlten Lichtbündel beruht, was zu einer Effizienzminderung führt. Zudem löst diese Methode nur das Problem der Schattenwürfe. Zusätzlich liegt hierbei ein erhöhter Montageaufwand vor.

Die Druckschrift US 2005/0190564 A1 betrifft ein Lampe für ein Kraftfahrzeug.

In der Druckschrift EP 2 110 689 A1 ist eine Lichtverteilungsplatte beschrieben.

Aus der Druckschrift US 2,246,098 A sind eine Linse und ein Herstellungsverfahren hierfür bekannt.

Eine in nur einer Raumrichtung kollimierende Linse ist der Druckschrift US 7,123,419 B1 zu entnehmen.

Es ist in der Druckschrift US 6,264,347 B1 ein Leuchte mit einer gleichmäßigen Ausleuchtung einer Lichtaustrittsfläche offenbart.

Die Angabe einer Doppelkonvexlinse und eine Herstellungsverfahrens hierzu findet sich in der Druckschrift GB 2 332 638 A.

Es ist Aufgabe der vorliegenden Anmeldung, ein optisches Element anzugeben, das die oben genannten Nachteile vermeidet, wodurch sich vorteilhafterweise ein optisches Element ergibt, das eine homogene Ausleuchtung ermöglicht. Weiter ist es Aufgabe der vorliegenden Anmeldung, eine strahlungsemittierende Vorrichtung mit einem derartigen optischen Element anzugeben, bei der sich die Vorrichtung durch eine besonders homogene Abstrahleffizienz über den Abstrahlwinkel auszeichnet.

Diese Aufgaben werden durch ein optisches Element mit den Merkmalen des Anspruchs 1 und durch eine strahlungsemittierende Vorrichtung mit den Merkmalen des Anspruchs 8 gelöst. Vorteilhafte Weiterbildungen des optischen Elements und der strahlungsemittierenden Vorrichtung sind Gegenstand der abhängigen Ansprüche.

Es weist das optische Element einen Optikkörper und eine Mehrzahl von Mikrostrukturen auf, wobei der Optikkörper als Halbschale ausgebildet ist und eine Innenfläche und eine Außenfläche aufweist. Die Mikrostrukturen bilden die Innen- und/oder Außenfläche des Optikkörpers zumindest stellenweise aus. Die Mikrostrukturen sind lichtstreuende refraktive Strukturen.

Es ist das optische Element dazu eingerichtet, durchstrahlt zu werden. Mit anderen Worten wirkt das optische Element in Transmission und nicht in Reflexion. Das optische Element ist also linsenartig ausgebildet und nicht spiegelartig.

Das optische Element zeichnet sich somit durch refraktive Strukturen aus, die vorteilhafterweise lediglich Fresnelverluste aufweisen und die nachteilige Rückstreuung von herkömmlichen Streuelementen vermeiden. Diese refraktiven Strukturen sind auf der Halbschale angebracht beziehungsweise bilden deren Fläche. Dabei können diese Mirkostrukturen auf der Innen- und Außenfläche der Halbschale oder nur auf einer dieser Flächen angebracht sein. Aufgrund der Mirkostrukturen erfolgt eine Homogenisierung der Abstrahlcharakteristik in Richtung der Krümmung der refraktiven Strukturen.

Mit einem derartigen optischen Element kann eine sehr hohe Abstrahleffizienz erzielt werden, da im Wesentlichen nur Fresnelverluste auftreten. Zudem wird vorteilhafterweise gleichzeitig das Problem des Durchmischens und der Schattenwürfe gelöst. Gegebenenfalls nachgeschaltete weitere Optiken können dabei wesentlich einfacher ausgeführt sein. Zudem können die Mikrostrukturen so ausgebildet sein, dass sie bereits zur Strahlungsformung geeignet sind.

Das optische Element ist bevorzugt strahlungsdurchlässig. Insbesondere ist das optische Element zumindest teiltransparent im UV-Wellenlängenbereich und/oder im sichtbaren Wellenlängenbereich.

Eine Halbschale ist im Rahmen der Anmeldung ein dreidimensionaler Körper, der halbschalenförmig ausgebildet ist. Beispielsweise ist die Halbschale eine hohle Halbkugel.

Das optische Element, insbesondere der Optikkörper und die Mikrostrukturen, sind vorzugsweise einstückig ausgebildet, also in einem Stück hergestellt. Beispielsweise ist das optische Element mittels eines Gussverfahrens, beispielsweise eines Spritzgussverfahrens oder eines Spritzpressverfahrens, hergestellt. Die Mikrostrukturen sind somit nicht auf der Innen- und/oder Außenfläche der Halbschale aufgebracht, sondern bilden diese Fläche selbst aus.

Die Mikrostrukturen sind refraktive Strukturen, die vorteilhafterweise nicht mit Rauheit oder Diffusoren arbeiten. Refraktive Strukturen zeichnen sich dadurch aus, dass Licht an ihnen gemäß dem Brechungsgesetz gebrochen wird. Rückstreuungen werden dabei vorteilhafterweise vermieden, sodass sich insgesamt die Auskoppeleffizienz mit Vorteil erhöht.

Es sind die Mikrostrukturen als Ringform ausgebildet. Ringform bedeutet insbesondere, dass die Innen- und/oder Außenfläche des Optikkörpers Rillen aufweist, wodurch sich gekrümmte Erhebungen in dieser Fläche ausbilden. Die Rillen können dabei horizontal oder vertikal auf dieser Fläche ausgebildet sein. Vergleicht man den Optikkörper mit einer Erdkugel, so können die Rillen entlang der Längenkreise oder entlang der Breitenkreise ausgebildet sein.

Bei ringförmigen Mikrostrukturen erfolgt die Homogenisierung der Abstrahlcharakteristik in Richtung senkrecht zur Tangente der jeweiligen Ringform.

Die Mikrostrukturen weisen vorteilhafterweise jeweils eine Krümmung auf, anhand derer die Homogenisierung der Abstrahlcharakteristik erfolgt.

In einer Weiterbildung weisen die Mikrostrukturen zumindest teilweise eine unterschiedliche Krümmung auf. Beispielsweise sind die Mikrostrukturen als Ringform ausgebildet, wobei die einzelnen Ringformen sich in ihrer Krümmung unterscheiden. Dabei müssen die Ringformen nicht zwangsläufig alle eine unterschiedliche Krümmung aufweisen, sondern können zumindest teilweise dieselbe Krümmung aufweisen.

Alternativ können die Mikrostrukturen jeweils eine gleiche beziehungsweise identische Krümmung aufweisen.

Die jeweilige Form der Mikrostrukturen und die jeweilige Krümmung der Strukturen zueinander sind abhängig von der gewünschten Strahlformung sowie der jeweiligen Anwendung des optischen Elements. Insbesondere ist die Ausgestaltung der Mikrostrukturen davon abhängig, mit welchen strahlungsemittierenden Bauelementen das optische Element gekoppelt werden soll und wie diese Bauelemente angeordnet sind.

In einer Weiterbildung sind die Mikrostrukturen im Querschnitt gesehen sphärisch ausgebildet. Alternativ können die Mikrostrukturen asphärisch ausgebildet sein. Die jeweilige Ausgestaltung ist dabei wiederum abhängig von der jeweiligen Anwendung des optischen Elements.

In einer Weiterbildung gilt bei dem optischen Element:

$$1/R_{Optikkörper} \leq 1/(2 * r_{Mikrostruktur}),$$

und

$$0,01 \leq D_{Mikrostruktur}/(4 * r_{Mikrostruktur}) \leq 0,5,$$

wobei $R_{Optikkörper}$ der Radius der Halbschale des Optikkörpers, $r_{Mikrostruktur}$ jeweils die Krümmung der Mikrostrukturen und $D_{Mikrostruktur}$ die Breite der Mikrostrukturen bzw. die freie Apertur sind. Dabei wird die Größe der Geometrie der Mikrostrukturen durch die numerische Apertur begrenzt. Das einfallende Lichtbündel darf dabei nicht zu divergent sein, um oben genannte Vorteile zu gewährleisten. Mit den oben angegebenen Dimensionierungsregeln der Mikrostrukturen kann eine optimale Homogenisierung der Abstrahlcharakteristik erzielt werden.

In einer Weiterbildung bilden die Mikrostrukturen sowohl die Innenfläche als auch die Außenfläche aus. Das bedeutet, dass auf beiden Flächen des Optikkörpers Mikrostrukturen angeordnet sind. Es sind auf der Innenfläche und der Außenfläche ringförmige Mikrostrukturen ausgebildet.

In einer Weiterbildung weisen die Mikrostrukturen der Innenfläche eine von der Mikrostrukturen der Außenfläche unterschiedliche Krümmung auf. Beispielsweise sind die Mikrostrukturen ringförmig ausgebildet, wobei sich die Krümmungen auf Innen- und Außenseite der Halbschale unterscheiden. Die Ausrichtung der Mikrostrukturen kann auf Innen- und Außenfläche dabei sich unterscheiden.

Die Anordnung der Mikrostrukturen der Innen- und Außenfläche zueinander ist dabei abhängig von der jeweiligen Anwendung des optischen Elements, der gewünschten Kombination des optischen Elements mit strahlungsemittierenden Halbleiterbauelementen und deren Anordnung zueinander.

In einer Weiterbildung weisen die Mikrostrukturen auf Innen- und Außenfläche eine Krümmung auf, für die gilt:

$$d_{max}/(2 * r_{Mikrostruktur}) \leq 1,2,$$

wobei $d_{max}$ die maximale Höhe der Mikrostrukturen und $r_{Mikrostruktur}$ die Krümmung der Mikrostrukturen sind. Die Krümmung der Mikrostrukturen sind dabei so gewählt, dass ein einfallendes Lichtbündel auf der Innenfläche des optischen Elements einen Fokus erzeugt, der einen Maximalabstand $d_{max}$ von der Außenfläche des optischen Elements nicht überschreitet.

Es sind die Mikrostrukturen auf der Innenfläche um 90° gedreht zu den Mikrostrukturen der Außenfläche. Es sind die Mikrostrukturen jeweils ringförmig ausgebildet, wobei die ringförmigen Mikrostrukturen der Innenfläche als Längskreise und die ringförmigen Mikrostrukturen der Außenfläche als Breitenkreise ausgebildet sind. Auf diese Weise wird vorteilhafterweise eine Strahlungsdurchmischung in alle Raumrichtungen möglich, wodurch sich eine besonders homogene Abstrahlcharakteristik des optischen Elements ergibt.

In einer Weiterbildung ist der Optikkörper als Halbkugelschale, Halbzylinderschale oder torische Halbschale ausgeführt. Die Ausgestaltung des Optikkörpers ist dabei wiederum abhängig von der Anwendung des optischen Elements in Zusammenhang mit der gewünschten Anordnung von strahlungsemittierenden Bauelementen.

In einer Ausführungsform weist eine strahlungsemittierende Vorrichtung zumindest ein strahlungsemittierendes Halbleiterbauelement auf, das eine zur Erzeugung geeignete aktive Schicht aufweist. Dem Halbleiterbauelement in Abstrahlrichtung ist das optische Element nachgeordnet.

Eine Vorrichtung mit einem derartigen optischen Element zeichnet sich insbesondere durch eine homogene Abstrahlcharakteristik der emittierten Strahlung aus. Dadurch ergibt sich eine sehr hohe Abstrahleffizienz, da im Wesentlichen nur Fresnelverluste auftreten. Zugleich wird eine optimale Durchmischung der von dem Bauelement emittierten Strahlung ermöglicht, wobei Schattenwürfe vermieden werden. Die refraktiven Mikrostrukturen können dabei so ausgelegt sein, dass sie zur Formung des von dem Bauelement emittierten Strahlung beitragen.

Die in Verbindung mit dem optischen Element genannten Merkmale gelten auch für die Vorrichtung und umgekehrt.

In einer Weiterbildung umfasst die Vorrichtung eine Mehrzahl von Halbleiterbauelementen, die einfarbiges oder zumindest teilweise verschiedenfarbiges Licht emittieren. Die Vorrichtung weist beispielsweise ein Array aus einfarbigen LEDs auf. Die LEDs emittieren beispielsweise Farbe im weißen Farbortbereich. Alternativ kann die Vorrichtung ein Array aus LEDs mit mindestens zwei verschiedenen Farben aufweisen, beispielsweise weist die Vorrichtung rote und weiße LEDs auf.

Das optische Element der Vorrichtung hebt mit Vorteil die räumliche Trennung der einzelnen Halbleiterbauelemente auf, wodurch vorteilhafterweise eine Homogenisierung der Abstrahlcharakteristik gewährleistet werden kann.

Die Halbleiterbauelemente sind beispielsweise Halbleiterchips, die zur Strahlungserzeugung geeignet sind. Beispielsweise sind die Halbleiterchips LEDs, vorzugsweise Dünnfilm-LEDs.

Durch gezielte Wahl der Halbleiterbauelemente kann eine Vorrichtung erzeugt werden, die Strahlung eines bestimmten Farbortbereichs emittiert, beispielsweise eine weiß emittierende Vorrichtung.

In einer Weiterbildung ist dem optischen Element in Abstrahlrichtung eine Sekundäroptik nachgeordnet. Das optische Element ist demnach nicht gänzlich dazu geeignet, eine gewünschte Strahlformung zu gewährleisten. Hierfür wird die Sekundäroptik nachgeschaltet, die aufgrund der Strahlungshomogenisierung durch das optische Element vorteilhafterweise wesentlich einfacherer ausgeführt sein kann als ohne optisches Element. Das optische Element ist dabei zwischen Halbleiterbauelement beziehungsweise Halbleiterbauelementen und Sekundäroptik angeordnet.

Die Sekundäroptik ist beispielsweise eine nachgeschaltete Linse oder Linsenanordnung.

Gemäß zumindest einer Ausführungsform weist das optische Element einen Mittelpunkt auf. Ist das optische Element zum Beispiel als Kugelschale geformt, so ist der Mittelpunkt des optischen Elements der Mittelpunkt der zugehörigen Kugel. Bezogen auf den Mittelpunkt des optischen Elements weisen die einzelnen Mikrostrukturen an der Außenfläche und/oder an der Innenfläche und entlang einer oder entlang zweier, dann bevorzugt orthogonaler Raumrichtungen ähnlich wie in Kugelkoordinaten, eine Ausdehnung von mindestens 5° oder von mindestens 8° oder von mindestens 11° auf. Die Mikrostrukturen können eine Ausdehnung von höchstens 20° oder von höchstens 16° oder von höchstens 14° aufweisen.

Gemäß zumindest einer Ausführungsform weisen die Mikrostrukturen entlang einer oder entlang zweier orthogonaler Raumrichtungen eine mittlere Ausdehnung von mindestens 0,25 mm oder von mindestens 0,75 mm auf. Alternativ oder zusätzlich beträgt die mittlere Ausdehnung höchstens 5 mm oder höchstens 2,5 mm.

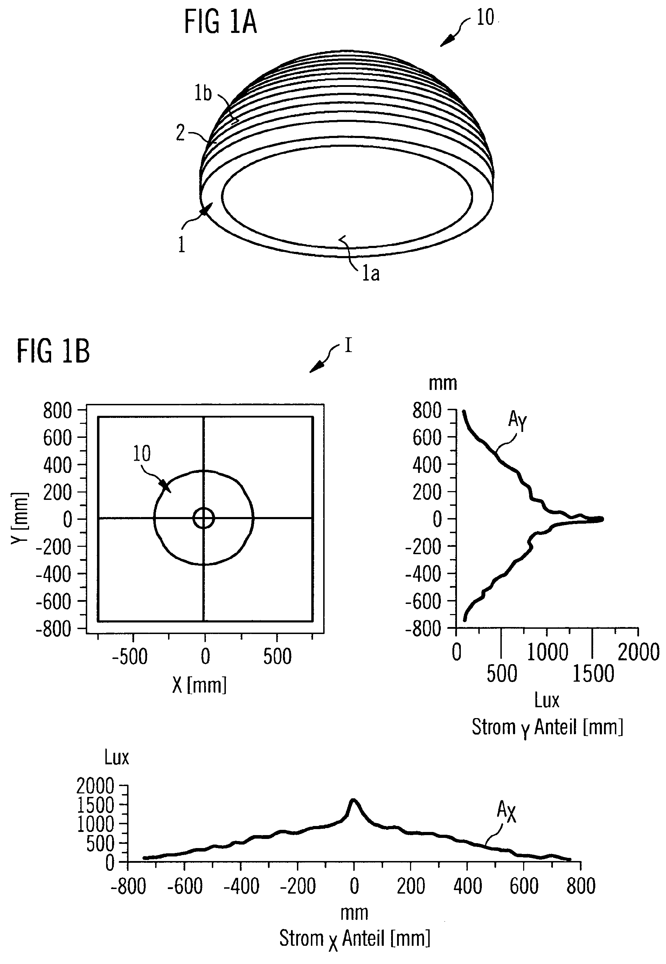

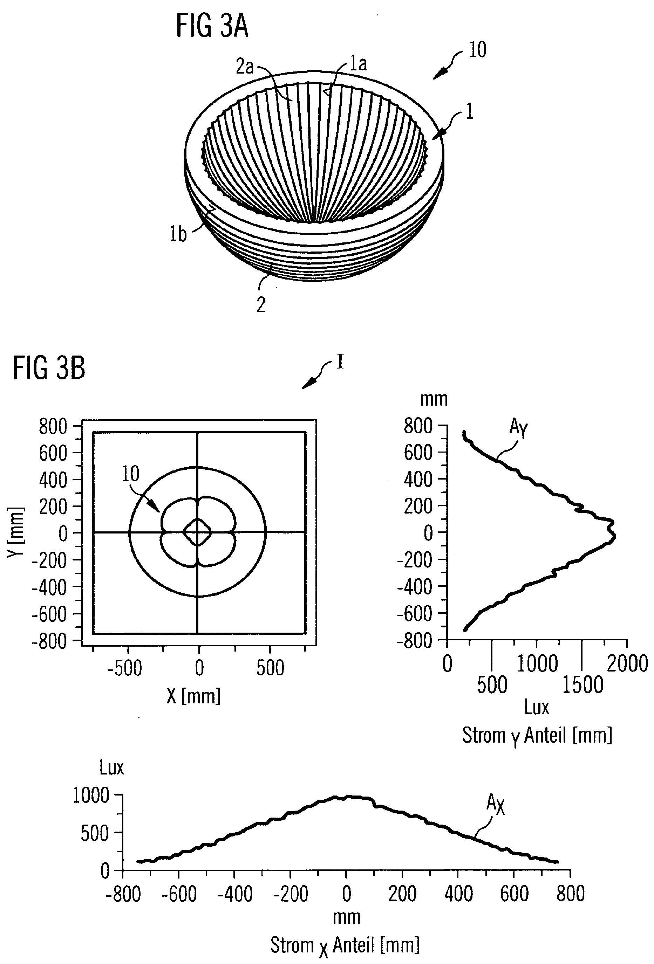

Weitere Vorteile und vorteilhafte Weiterbildungen der Erfindung ergeben sich aus den im Folgenden in Verbindung mit den Figuren 3A bis 3B beschriebenen Ausführungsbeispiel. Figuren 1 bis 6 zeigen:

Figur 3A      eine schematische Ansicht auf ein Ausführungsbeispiel eines erfindungsgemäßen optischen Elements,

Figuren 1A, 2 und 4A   jeweils eine schematische Ansicht auf eine Abwandlung eines optischen Elements,

Figuren 1B, 3B und 4B   jeweils schematische Diagramme der Abstrahlcharakteristik eines optischen Elements gemäß den Figuren 1A, 3A und 4A,

Figuren 5A und 5B    jeweils einen schematischen Querschnitt durch eine Abwandlung einer strahlungsemittierenden Vorrichtung,

Figur 6A    einen schematischen Querschnitt einer herkömmlichen Vorrichtung, und

Figur 6B    Diagramme zur Abstrahlcharakteristik der Vorrichtung gemäß der Figur 6A.

In den Figuren können gleiche oder gleich wirkende Bestandteile jeweils mit den gleichen Bezugszeichen versehen sein. Die dargestellten Bestandteile und deren Größenverhältnisse untereinander sind nicht als maßstabsgerecht anzusehen. Vielmehr können einzelne Bestandteile, wie beispielsweise Schichten, Strukturen, Komponenten und Bereiche zur besseren Darstellbarkeit und/oder zum besseren Verständnis übertrieben dick oder groß dimensioniert dargestellt sein.

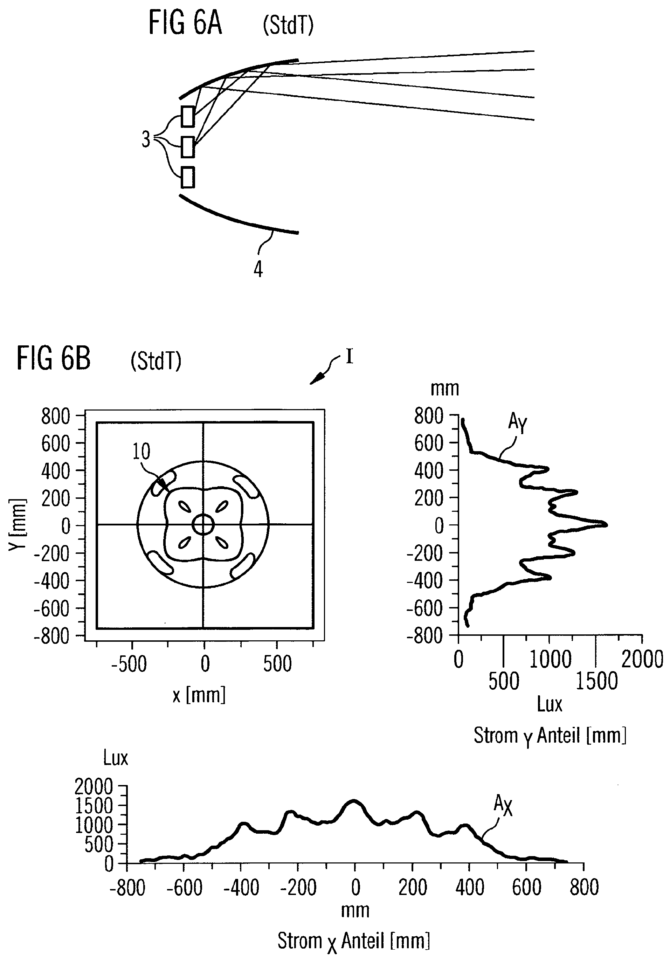

In Figur 6A ist ein Querschnitt einer strahlungsemittierenden Vorrichtung gemäß dem Stand der Technik dargestellt, die Halbleiterbauelemente 3 umfasst, die in einem Reflektor 4 angeordnet sind. Die Halbleiterbauelemente 3 emittieren im Betrieb Strahlung, die an dem Reflektor 4 zumindest teilweise reflektiert wird. Dabei kommt es nachteilig aufgrund von Abschattungen der Lichtabstrahlung an der Öffnung des Reflektors 4 zu Schattenwürfen. Zudem kann es zu einer Aufspaltung der Lichtbündel gemäß der Symmetrie der Bauelementanordnung kommen.

Aus dem Stand der Technik ist bekannt, diese Probleme mittels Diffusoren zu lösen, die beispielsweise über den Bauelementen angeordnet sind (nicht dargestellt). Nachteilig hierbei ist jedoch, dass derartige Anordnungen sehr verlustreich sind. Alternativ ist bekannt, die Apertur einer dem Reflektor nachgeordneten Sekundäroptik mittels einer Montage von dreidimensionalen Strukturen, beispielsweise Zacken oder Folien mit Transmissionsgradienten, zu verbessern (nicht dargestellt). Nachteilig ist hierbei jedoch der hohe Montageaufwand derartiger Zacken oder Folien.

In Figur 6B sind drei Diagramme dargestellt, die die Abstrahlcharakteristik einer Vorrichtung gemäß der Figur 6A zeigen. Das Diagramm I zeigt die Abstrahlcharakteristik, insbesondere die Strahlungsintensität in Aufsicht auf die Vorrichtung 10. Dabei weist die.Abstrahlcharakteristik Lichtintensitätsmaxima auf, die in dem Diagramm heller dargestellt sind. Benachbart zu diesen Lichtintensitätsmaxima wird von der Vorrichtung eine geringere Strahlungseffizienz emittiert, sodass die Abstrahlcharakteristik insgesamt einen inhomogenen Eindruck vermittelt.

In Figur 6B sind weitere Diagramme dargestellt, die einen Querschnitt der Abstrahlcharakteristik zeigen. Die Messkurve $A_Y$ zeigt einen Querschnitt der Abstrahlcharakteristik in Y-Ebene, die Messkurve $A_X$ eine Abstrahlcharakteristik in x-Ebene. Die Abstrahlcharakteristik weist sowohl Intensitätsmaxima als auch benachbarte Intensitätsminima, sodass insgesamt eine inhomogene Abstrahlcharakteristik erzeugt wird.

Um diese inhomogene Abstrahlcharakteristik zu vermeiden und eine homogene Abstrahlcharakteristik zu erzielen, wird erfindungsgemäß den Halbleiterbauelementen ein optisches Element nachgeordnet. Dieses optische Element wird in Zusammenhang mit Figur 3 im Folgenden näher erläutert.

In Figur 1A ist eine schematische Ansicht auf eine Abwandlung eines optischen Elements 10 gezeigt, das einen Optikkörper 1 und eine Mehrzahl von Mikrostrukturen 2 aufweist. Der Optikkörper 1 weist eine Innenfläche 1a und eine Außenfläche 1b auf und ist als Halbkugelschale ausgebildet. Dies bedeutet, dass der Optikkörper 1 eine hohle Halbkugelform aufweist. Diese Halbkugelschale wird bei einer erfindungsgemäßen strahlungsemittierenden Vorrichtung beispielsweise auf eine Mehrzahl von strahlungsemittierenden Halbleiterbauelementen gesetzt, sodass diese im Inneren der Halbkugelschale angeordnet sind und Strahlung in Richtung der Innenfläche 1a emittieren.

Die Mikrostrukturen 2 des optischen Elements 10 sind auf der Außenfläche 1b des Optikkörpers 1 angeordnet. Insbesondere bilden die Mikrostrukturen 2 die Außenfläche 1b zumindest stellenweise aus. Das bedeutet, dass die Mikrostrukturen 2 und der Optikkörper 1 einstückig ausgebildet sind. Beispielsweise ist das optische Element 10 spritzgegossen hergestellt.

Die Mikrostrukturen 2 sind gemäß der Figur 1A ringförmig ausgebildet, weisen also eine Ringform auf. Das bedeutet, dass an der Außenfläche des optischen Elements 10 Rillen angeordnet sind, die radial ausgebildet sind. Die Mikrostrukturen 2 bilden dabei runde Erhebungen an der Außenfläche 1b aus, die durch jeweils zwei Rillen begrenzt sind.

Der Optikkörper 1 weist eine Symmetrie zu einer Symmetrieachse auf, die einen zentralen Punkt des Optikelements durchbricht. Die Mikrostrukturen sind dabei ringförmig um die Symmetrieachse ausgebildet. Die Ringform der Mikrostrukturen 2 wird dabei in Richtung des zentralen Punktes, also in Richtung Symmetrieachse, kleiner. Insbesondere werden der Durchmesser sowie die Breite der Ringform in Richtung des zentralen Punkts geringer.

Die Mikrostrukturen 2 auf der Außenseite weisen eine Ringform mit einer Krümmung auf. Dabei können die einzelnen Ringformen der Mikrostrukturen eine identische Krümmung oder eine unterschiedliche Krümmung aufweisen. Durch die Krümmung erfolgt eine Strahlungshomogenisierung.

Die Innenfläche 1a ist gemäß der Figur 1 eben ausgebildet, weist also keine Mikrostrukturen auf. Die Innenfläche 1a ist somit als unstrukturierte Halbkugelschicht ausgebildet.

Das optische Element 10 erlaubt es vorteilhafterweise, eine Lichtstreuung aufgrund der Mikrostrukturen 2 zu erzeugen, die nicht mittels Rauheit oder wie Diffusoren arbeiten. Insbesondere sind die Mikrostrukturen 2 lichtstreuende refraktive Strukturen. Sind dem optischen Element 10 somit Halbleiterbauelemente vorgeordnet, so erfolgt aufgrund des optischen Elements eine homogene Abstrahlcharakteristik mit sehr hoher Effizienz, da vorteilhafterweise im Wesentlichen nur Fresnelverluste auftreten. Gleichzeitig wird vorteilhafterweise das Problem der Durchmischung und der Schattenwürfe der von den Bauelementen emittierte Strahlung gelöst.

In Figur 1B ist die Abstrahlcharakteristik einer Vorrichtung gezeigt, die Halbleiterbauelemente und als nachgeordnetes Element das optische Element gemäß der Figur 1A aufweist. Die Halbleiterbauelemente sind in einer 3 x 3-Array-Anordnungdem optischen Element vorgeordnet. Beispielsweise sind die Halbleiterbauelemente weiße LEDs. Die Vorrichtung ist in einem einfachen bündelnden Reflektor angeordnet. D.h. die LEDs und das optische Element sind an einer Bodenfläche des Reflektors befestigt.

In dem Diagramm I der Figur 1B ist die Strahlungsintensität in Aufsicht auf das optische Element dargestellt. Lediglich im zentralen Punkt, durch den die Symmetrieachse des optischen Elements verläuft, ist eine erhöhte Lichtintensität zu sehen. Zur Symmetrieachse benachbarte Bereiche weisen eine ähnliche Lichtintensität auf, sodass mittels des optischen Elements 10 im Wesentlichen eine homogene Abstrahlcharakteristik erzeugt wird.

In Figur 1B sind ebenfalls Messkurven $A_Y$, $A_X$ dargestellt, die einen Querschnitt der Abstrahlcharakteristik in der X-beziehungsweise Y-Ebene durch die Symmetrieachse darstellen. Diese Messkurven $A_X$, $A_Y$ verdeutlichen die im Wesentlichen gleichmäßige Abstrahleffizienz mit einem Maximum im Zentralpunkt.

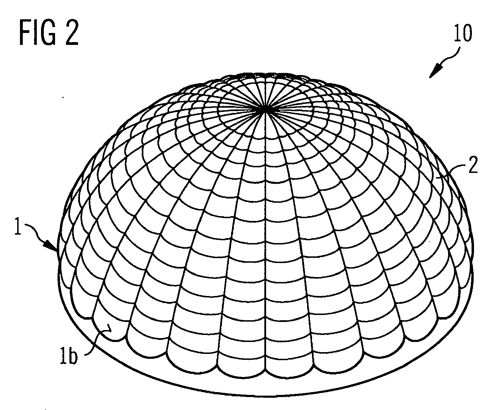

In Figur 2 ist eine Aufsicht auf eine Abwandlung eines optischen Elements gezeigt, das im Unterschied zu dem in Figur 1A dargestellten optischen Element keine Mikrostrukturen als Ringform aufweist. Bei dem optischen Element 10 der Figur 2 ist auf der Außenfläche 1b des Optikkörpers 1 ein Array aus Einzellinsen ausgebildet. Der Optikkörper 1 und die Mikrostrukturen 2, also die Einzellinsen, sind dabei wiederum einstückig ausgebildet. Die Einzellinsen sind matrizenartig auf der Außenfläche 1b angeordnet. Diese matrizenartige Anordnung kann beispielsweise rotationssymmetrisch zur Symmetrieachse des optischen Elements 10 ausgebildet sein, wobei die Linsengröße in Richtung Symmetrieachse abnimmt. Die Einzellinsen dagegen können nicht rotationssymmetrisch ausgebildet sein. Eine optimale Strahlungshomogenisierung wird beispielsweise durch gekreuzte Einzellinsen, beispielsweise Zylinderlinsen, erreicht, d.h. die Homogenisierung basiert auf einer Symmetriebrechung aus der Rotationssymmetrie.

Im Übrigen stimmt das optische Element der Figur 2 im Wesentlichen mit dem optischen Element der Figur 1A überein.

Gemäß Figur 2 weisen die Mikrostrukturen 2, in Draufsicht auf die Außenfläche 1b gesehen, eine trapezförmige und, an dem Durchstoßpunkt mit der optischen Achse, bevorzugt eine dreieckige Grundfläche auf. Hin zu dem Durchstoßpunkt nimmt eine Grundfläche der Mikrostrukturen 2 stetig ab. Die Mikrostrukturen 2 sind durch Rillen entlang von Breitenkreisen und von Längengraden der halbkugelschalenförmigen Außenfläche 1b gebildet.

In Figur 3A ist ein Ausführungsbeispiel eines optischen Elements 10 gezeigt, wobei im Unterschied zu dem in Figur 1A dargestellten optischen Element die Innenfläche 1a des Optikkörpers 1 ebenfalls eine Mikrostrukturierung 2a aufweist. Die Ausgestaltung der Außenfläche 1b des Optikkörpers 1 stimmt im Wesentlichen mit der Ausgestaltung des optischen Elements der Figur 1A überein.

Die Mikrostrukturen 2a der Innenfläche 1a sind ebenfalls ringförmig ausgebildet, wobei diese ringförmige Ausgestaltung um 90° gedreht ist zu der Ringform der Mikrostrukturen 2 der Außenfläche 1b. Die ringförmigen Mikrostrukturen 2a der Innenfläche 1a sind somit entlang der Symmetrieachse geführt. Vergleicht man das optische Element 10 mit Figur 3A beispielsweise mit einer halben hohlen Erdkugel, so sind die ringförmigen Mikrostrukturen 2 der Außenfläche als Breitenkreise und die Mikrostrukturen 2a der Innenfläche 1a als Längenkreise ausgeführt.

Die Innenfläche 1a weist demnach ebenso wie die Außenfläche 1b Rillen auf, die durch Rundungen verbunden sind. Die Rundungen weisen dabei jeweils eine Krümmung auf, die unterschiedlich stark oder gleich ausgebildet sein kann. Es ist auch möglich, dass die Krümmung der Mikrostrukturen der Außenfläche 1b unterschiedlich ausgebildet ist zur Krümmung der Mikrostrukturen 2a der Innenfläche 1a.

Eine Kombination von um 90° verdrehte Mikrostrukturen auf Innen- und Außenfläche sorgt für eine Lichtmischung in alle Raumrichtungen, sodass in Kombination mit Halbleiterbauelementen dieses optische Element 10 vorteilhafterweise eine optimale Durchmischung der von der mehreren Bauelementen emittierten Strahlung gewährleistet. Gemäß Figur 3A sind also die Mikrostrukturen 2a auf der Innenfläche 1a um 90° gedreht zu den Mikrostrukturen 2 der Außenfläche 1b angeordnet, bezüglich Haupterstreckungsrichtungen der Mikrostrukturen 2a, 2. Die Mikrostrukturen 2 an der Außenfläche (1b) verlaufen entlang von Breitenkreisen des halbkugelförmigen optischen Elements 10, also jeweils senkrecht zu einer optischen Achse. Die Mikrostrukturen 2a an der Innenseite 1a verlaufen entlang von Längengraden, also in Seitenansicht gesehen parallel zur optischen Achse. Ferner spitzen sich die Mikrostrukturen 2a hin zu einem Durchstoßpunkt der optischen Achse mit der Innenfläche 1a zu.

Die Mikrostrukturen 2, 2a können in einer Abwandlung auch genau anders herum als in Figur 3A dargestellt orientiert sein, also dass die inneren Mikrostrukturen 2a dann entlang von Breitenkreisen verlaufen und die äußern Mikrostrukturen 2 entlang von Längengraden.

In Figur 3B sind Diagramme betreffend die Strahlungsintensität über den Abstrahlwinkel gezeigt. Diagramm I zeigt eine Aufsicht auf die Abstrahlintensität des optischen Elements 10 der Figur 3A. Wie gezeigt ist, weist eine derartige Vorrichtung im mittleren Bereich eine höhere Lichtemission auf als im äußeren Bereich. Dies wird auch die Messkurven $A_X$ und $A_Y$ bestätigt, die einen Querschnitt durch das Abstrahlprofil in X- beziehungsweise Y-Ebene durch den Zentralpunkt zeigen. Das Abstrahlprofil folgt demnach näherungsweise einem gaußschen Strahlprofil, was für viele Anwendungen vorteilhaft ist.

Das Abstrahlprofil zeigt vorteilhafterweise nicht eine Mehrzahl von Intensitätsmaxima, die begrenzt werden von einer Mehrzahl von Intensitätsminima, sondern es wird eine gleichmäßige Ausleuchtung mit lediglich einem zentralen Maximum gewährleistet.

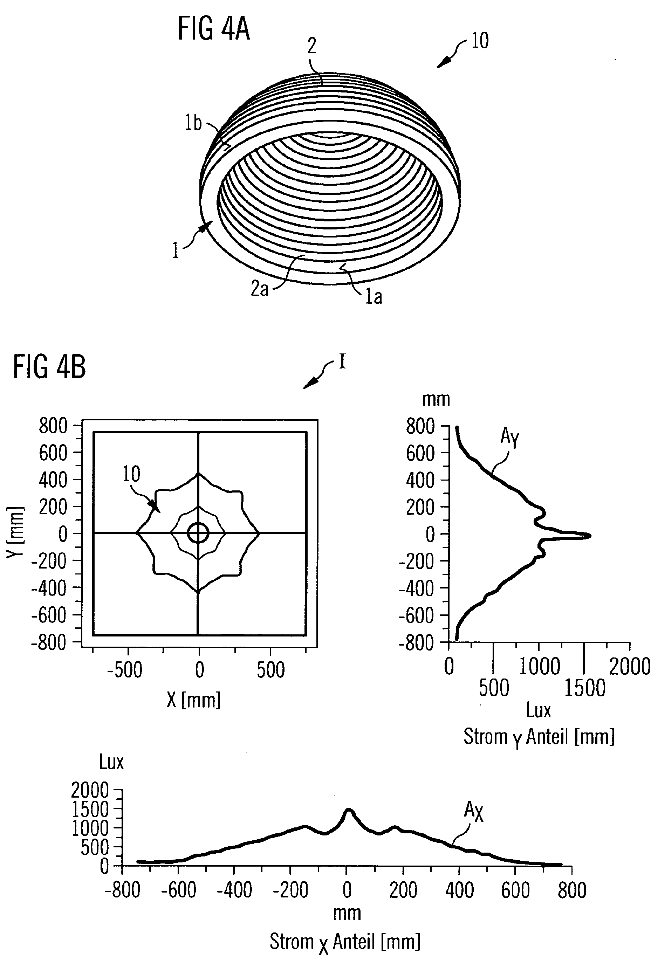

In der Abwandlung der Figur 4A ist im Vergleich zu dem Ausführungsbeispiel der Figur 3A die Mikrostrukturierung 2a der Innenfläche 1a gleich ausgerichtet wie die Mikrostrukturierung 2 der Außenfläche 1b. In diesem Fall folgt die Mikrostrukturierung 2a der Innenfläche 1a also ebenfalls den Breitenkreisen. Dabei sind die Mikrostrukturen 2 der Außenfläche 1b direkt gegenüber den Mikrostrukturen 2a der Innenfläche 1a angeordnet. Alternativ kann die Anordnung der Mikrostrukturen 2, 2a mit seitlichem Versatz in polarer Richtung zueinander angeordnet sein (nicht dargestellt).

Im Übrigen stimmt die Abwandlung der Figur 4A im Wesentlichen mit dem Ausführungsbeispiel der Figur 3A überein.

In Figur 4B ist das Abstrahlprofil einer Vorrichtung mit dem optischen Element gemäß der Figur 4A gezeigt. Das Diagramm I zeigt eine Aufsicht auf das Abstrahlprofil des optischen Elements 10, wobei lediglich im Zentralpunkt eine erhöhte Strahlungsemission gemessen wird. Benachbarte Bereiche des Zentralpunkts zeigen eine gleichmäßige Abstrahlcharakteristik auf. Dies wird in den Messkurven $A_X$, $A_Y$ verdeutlicht, die eine gleichmäßige Abstrahlcharakteristik aufweisen, wobei ein Lichtemissionsmaximum im Zentralpunkt vorliegt.

Je nach gewünschter Anwendung und demnach gewünschten Abstrahlprofil kann eine Vorrichtung bereitgestellt werden, die strahlungsemittierende Halbleiterbauelemente und ein optisches Element gemäß der Figur 3A umfasst. Die Optikkörper 10 sind dabei nicht zwangsläufig auf eine Halbkugelschale beschränkt. Die Optikkörper können alternativ als Halbzylinderschale oder torische Halbschale ausgeführt sein (nicht dargestellt).

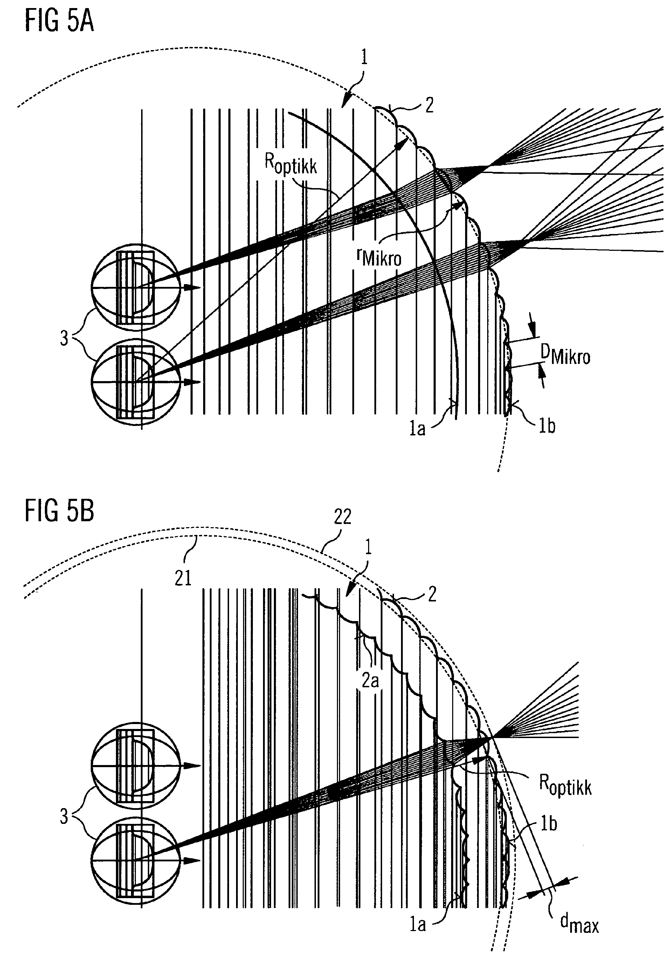

In den Figuren 5A und 5B sind Ausschnitte von Querschnitten durch eine strahlungsemittierende Vorrichtung gezeigt, die strahlungsemittierende Halbleiterbauelemente 3 und ein in Abstrahlrichtung nachgeordnetes optisches Element umfasst. Die strahlungsemittierenden Bauelemente können dafür ausgerichtet sein, einfarbiges oder verschiedenfarbiges Licht zu emittieren. Der Vorrichtung kann jeweils eine Sekundäroptik nachgeordnet sein. Eine derartige Sekundäroptik kann dazu beitragen, die abgestrahlten Lichtbündel gemäß einer gewünschten Abstrahlcharakteristik zu formen.

In der Abwandlung der Figur 5A findet ein optisches Element gemäß der Figur 1A Anwendung. Der Optikkörper 1 weist eine glatte Innenfläche 1a auf. Auf der Außenfläche 1b sind Mikrostrukturen 2 ausgebildet, die als Ringform in radialer Richtung verlaufen. Die Mikrostrukturen 2 weisen dabei eine Krümmung $r_{Mikro}$ und eine Breite bzw. freie Apertur $D_{Mikro}$ auf. Die Mikrostrukturen 2 des Optikkörpers 1 sind in einem Abstand $R_{Optikk}$ zu den LEDs angeordnet.

Die Halbleiterbauelemente 3 emittieren Lichtbündel, die an der Mikrostrukturierung 2 geformt werden. Damit das einfallende Lichtbündel durch die Mikrostrukturen nicht zu divergent wird, müssen folgende Bedingungen erfüllt sein:

$$1/R_{Optikk} \leq 1/(2 * r_{Mikro}),$$

und

$$0{,}01 \leq D_{Mikro}/(4 * r_{Mikro}) \leq 0{,}5.$$

Mit derartigen Bedingungen wird ein optisches Element bereitgestellt, das möglichst geringe Fresnelverluste aufweist, wodurch eine homogene Abstrahlcharakteristik erzielt wird.

Die Abwandlung der Figur 5B unterscheidet sich von der Abwandlung der Figur 5A dadurch, dass ein optisches Element gemäß der Figur 4A Anwendung findet, das also an der Innenfläche 1a des Optikkörpers 1 gleich ausgerichtete Mikrostrukturen 2 aufweist.

Die Krümmung der Mikrostrukturen 2, 2a auf Innen- und Außenfläche werden dabei so gewählt, dass ein von den Bauelementen emittierter einfallender Lichtbündel einen Fokus erzeugt, der einen Maximalabstand $d_{max}$ von der Außenfläche des Optikkörpers nicht überschreitet. Hierzu muss gelten:

$$d_{max}/(2 * r_{Mikro}) \leq 1{,}2.$$

Der Abstand $d_{max}$ wird dabei gemessen an einem Radius 22, der sich aus einer Verbindung der höchsten Punkte der Mikrostrukturen 2 der Außenfläche 1b ergibt und an einem Radius 21, der sich durch eine Verbindung der tiefsten Punkte der Mikrostrukturen 2 der Außenfläche 1b ergibt, also der Rillen.

In den Figuren 1B, 3B und 4B findet jeweils ein 3 x 3-Array von weißen LEDs Anwendung. Alternativ können die LEDs verschiedenfarbiges Licht emittieren. Beispielsweise umfasst eine derartige Vorrichtung ein 3 x 3-Array mit fünf weißen und vier roten LEDs.

**Patentansprüche**

1. Optisches Element (10) mit einem Optikkörper (1) und einer Mehrzahl von Mikrostrukturen (2), wobei

   - der Optikkörper (1) als Halbschale ausgebildet ist und eine Innenfläche (1a) und eine Außenfläche (1b) aufweist,
   - die Mikrostrukturen (2) die Außenfläche (1b) des Optikkörpers (1) ausbilden, und
   - die Mikrostrukturen (2) lichtstreuende refraktive Strukturen sind, **dadurch gekennzeichnet dass**
   - die Mikrostrukturen (2) an der Außenfläche (1b) ringförmig um eine Symmetrieachse ausgebildet sind und Durchmesser dieser Mikrostrukturen (2) in Richtung hin zu einem Durchstoßpunkt des Optikkörpers (1) mit der Symmetrieachse kleiner werden, und dadurch, dass
   - Mikrostrukturen (2a) an der Innenfläche (1a) ringförmig gestaltet und um 90° gedreht zu der Ringform der Mikrostrukturen (2) an der Außenfläche (1b) angeordnet sind, sodass die ringförmigen Mikrostrukturen (2a) an der Innenfläche (1a) entlang der Symmetrieachse geführt sind,

   derart, dass die Mikrostrukturen (2) an der Außenfläche (1b) als Breitenkreise und die Mikrostrukturen (2a) an der Innenfläche (1a) als Längenkreise ausgeführt sind.

2. Optisches Element nach Anspruch 1, wobei die Mikrostrukturen (2, 2a) im Querschnitt gesehen sphärisch ausgebildet sind.

3. Optisches Element nach Anspruch 1, wobei die Mikrostrukturen (2, 2a) asphärisch ausgebildet sind.

4. Optisches Element nach einem der vorhergehenden Ansprüche, wobei gilt:

$$1 \ / \ R_{Optikkörper} \leq 1 \ /(2 \ * \ r_{Mikrostruktur}),$$

   und

$$0,01 \leq D_{Mikrostruktur} \ /(4 \ * \ r_{Mikrostruktur}) \leq 0,5,$$

   wobei $R_{Optikkörper}$ der Radius der Halbschale des Optikkörpers, $r_{Mikrostruktur}$ die Krümmung der Mikrostrukturen und $D_{Mikrostruktur}$ die Breite der Mikrostrukturen sind.

5. Optisches Element nach einem der vorhergehenden Ansprüche, wobei die Mikrostrukturen (2, 2a) der Innenfläche (1a) eine von den Mikrostrukturen (2, 2a) der Außenfläche (1b) unterschiedliche Krümmung ($r_{Mikro}$) aufweisen.

6. Optisches Element nach einem der vorhergehenden Ansprüche, wobei die Mikrostrukturen (2a) an der Innenseite (1a) sich hin zu einem Durchstoßpunkt einer optischen Achse mit der Innenfläche (1a) zuspitzen.

7. Optisches Element nach einem der vorhergehenden Ansprüche, wobei der Optikkörper (1) als Halbkugelschale ausgeführt ist.

8. Strahlungsemittierende Vorrichtung mit zumindest einem strahlungsemittierenden Halbleiterbauelement (3), das eine zur Erzeugung geeignete aktive Schicht aufweist, und mit einem dem Halbleiterbauelement (3) in Abstrahlrichtung nachgeordneten optischen Element (10) nach einem der vorhergehenden Ansprüche.

9. Strahlungsemittierende Vorrichtung nach Anspruch 8, wobei
die Vorrichtung eine Mehrzahl von Halbleiterbauelementen (3) umfasst, die einfarbiges oder zumindest teilweise verschiedenfarbiges Licht emittieren.

10. Strahlungsemittierende Vorrichtung nach Anspruch 8 oder 9, wobei
dem optischen Element (10) in Abstrahlrichtung eine Sekundäroptik nachgeordnet ist.

**Claims**

1. Optical element (10) comprising an optical body (1) and a plurality of microstructures (2), wherein

   - the optical body (1) is embodied as a half-shell and has an inner surface (1a) and an outer surface (1b),
   - the microstructures (2) form the outer surface (1b) of the optical body (1), and
   - the microstructures (2) are light-scattering refractive structures, **characterized in that**
   - the microstructures (2) are formed on the outer surface (1b) in a ring-shaped fashion about an axis of symmetry and diameters of said microstructures (2) become smaller in a direction towards a point of intersection of the optical body (1) with the axis of symmetry, and **in that**
   - microstructures (2a) are configured in a ring-shaped fashion at the inner surface (1a) and are arranged in a manner rotated by 90° with respect to the ring shape of the microstructures (2) at the outer surface (1b), such that the ring-shaped microstructures (2a) at the inner surface (1a) are guided along the axis of symmetry,

   in such a way that the microstructures (2) at the outer surface (1b) are embodied as parallels of latitude and the microstructures (2a) at the inner surface (1a) are embodied as meridians of longitude.

2. Optical element according to Claim 1, wherein
the microstructures (2, 2a) are embodied as spherical as viewed in cross section.

3. Optical element according to Claim 1, wherein
the microstructures (2, 2a) are embodied as aspherical.

4. Optical element according to any of the preceding claims, wherein it holds true that:

$$1 \; / \; R_{\text{optical body}} \leq 1 \; / \; (2 \; * \; r_{\text{microstructure}}),$$

and

$$0.01 \leq D_{\text{microstructure}} \; / \; (4 \; * \; r_{\text{microstructure}}) \leq 0.5,$$

wherein $R_{\text{optical body}}$ is the radius of the half-shell of the optical body, $r_{\text{microstructure}}$ is the curvature of the microstructures and $D_{\text{microstructure}}$ is the width of the microstructures.

5. Optical element according to any of the preceding claims, wherein the microstructures (2, 2a) of the inner surface (1a) have a different curvature (rmicro) compared with the microstructures (2, 2a) of the outer surface (1b).

6. Optical element according to any of the preceding claims, wherein the microstructures (2a) at the inner side (1a) taper towards a point of intersection of an optical axis with the inner surface (1a).

7. Optical element according to any of the preceding claims, wherein the optical body (1) is embodied as a hemispherical shell.

8. Radiation-emitting device comprising at least one radiation-emitting semiconductor component (3) having an active layer suitable for generation, and comprising an optical element (10) according to any of the preceding claims, which is disposed downstream of the semiconductor component (3) in the emission direction.

9. Radiation-emitting device according to Claim 8, wherein
the device comprises a plurality of semiconductor components (3), which emit single-coloured or at least partly different-coloured light.

10. Radiation-emitting device according to Claim 8 or 9, wherein
a secondary optical unit is disposed downstream of the optical element (10) in the emission direction.


**Revendications**

1. Elément optique (10) comportant un corps optique (1) et une pluralité de microstructures (2), dans lequel

   - le corps otique (1) est réalisé sous la forme d'une demi-coque et comporte une surface intérieure (1a) et une surface extérieure (1b),
   - les microstructures (2) forment les surfaces extérieures (1b) du corps optique (1), et
   - les microstructures (2) sont des structures réfringentes diffusant la lumière, **caractérisé en ce que**
   - les microstructures (2) sont réalisées de manière à présenter une forme annulaire autour d'un axe de symétrie sur la surface extérieure (1b) et les diamètres desdites microstructures (2) se réduisent dans la direction d'un point de traversée du corps optique (1) le long de l'axe de symétrie, et **en ce que**
   - des microstructures (2a) sont réalisées sous forme annulaire sur la surface intérieure (1a) et sont disposées de manière tournée de 90° par rapport à la forme annulaire des microstructures (2) sur la surface extérieure (1b) de manière à ce que les microstructures de forme annulaire (2a) soient guidées sur la surface intérieure (1a) le long de l'axe de symétrie,

   de telle sorte que les microstructures (2) sont réalisées sous la forme de parallèles sur la surface extérieure (1b) et les microstructures (2a) sont réalisées sous la forme de méridiens sur la surface intérieure (1a).

2. Elément optique selon la revendication 1, dans lequel les microstructures (2, 2a) sont réalisées de manière à présenter la forme d'une sphère lorsqu'elles sont observées en section transversale.

3. Elément optique selon la revendication 1, dans lequel les microstructures (2, 2a) sont réalisées de manière à présenter une forme asphérique.

4. Elément optique selon l'une quelconque des revendications précédentes, dans lequel on a:

$$1/R_{corpsoptique} \leq 1/(2*r_{microstructure}),$$

   et

$$0,01 \leq D_{microstructure} /(4*r_{microstructure}) \leq 0,5,$$

   où Rcorpsoptique représente le rayon de la demi-coque du corps optique, rmicrostructure représente la courbure des microstructures et Dmicrostructure représente la taille des microstructures.

5. Elément optique selon l'une quelconque des revendications précédentes,
   dans lequel les microstructures (2, 2a) de la surface intérieure (1a) présentent une courbure ($r_{micro}$) différente de celle des microstructures (2, 2a) de la surface extérieure (1b).

6. Elément optique selon l'une quelconque des revendications précédentes,
   dans lequel les microstructures (2a) s'amincissent sur la surface intérieure (1a) vers un point de traversée d'un axe optique avec la surface inférieure (1a).

7. Elément optique selon l'une quelconque des revendications précédentes,
   dans lequel le corps optique (1) est réalisé sous la forme d'une coque hémisphérique.

**8.** Dispositif émetteur de rayonnement comportant au moins un élément à semi-conducteur (3) émetteur de rayonnement qui comporte une couche active appropriée pour l'émission, et comportant un élément optique (10) selon l'une quelconque des revendications précédentes, disposé en aval de l'élément à semi-conducteur (3) dans la direction de rayonnement.

**9.** Dispositif émetteur de rayonnement selon la revendication 8, dans lequel le dispositif comprend une pluralité d'éléments à semi-conducteur (3) qui émettent une lumière d'une seule couleur ou de couleurs au moins partiellement différentes.

**10.** Dispositif émetteur de rayonnement selon la revendication 8 ou 9, dans lequel une optique secondaire est disposée en aval de l'élément optique (10) dans la direction de rayonnement.

## FIG 1A

## FIG 1B

FIG 2

# FIG 3A

# FIG 3B

## FIG 4A

## FIG 4B

Strom γ Anteil [mm]

Strom χ Anteil [mm]

## FIG 5A

$R_{optikk}$

$r_{Mikro}$

3

$D_{Mikro}$

1a    1b

## FIG 5B

22

21    1

2

2a

3

$R_{optikk}$

1b

1a    $d_{max}$

FIG 6A    (StdT)

3

4

FIG 6B    (StdT)

I

Y [mm]

10

x [mm]

mm

Ay

Lux

500    1500

Strom γ Anteil [mm]

Lux

Ax

mm

Strom χ Anteil [mm]

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20050190564 A1
- EP 2110689 A1
- US 2246098 A
- US 7123419 B1
- US 6264347 B1
- GB 2332638 A